# EUROPEAN PATENT APPLICATION

(11) **EP 4 338 624 A1**
(43) Date of publication of application: **20.03.2024**
(21) Application number: 21941799.5
(22) Date of filing: 10.05.2021
(51) Int. Cl.: A24F 40/53

(54) **POWER SUPPLY UNIT FOR AEROSOL GENERATION DEVICE, AND METHOD THEREFOR**

(71) Applicant: Japan Tobacco Inc., Tokyo 105-6927 (JP)
(72) Inventor: AOYAMA Tatsunari, Tokyo 130-8603 (JP); KAWANAGO Hiroshi, Tokyo 130-8603 (JP); NAGAHAMA Toru, Tokyo 130-8603 (JP); FUJIKI Takashi, Tokyo 130-8603 (JP); YOSHIDA Ryo, Tokyo 130-8603 (JP)
(74) Representative: Hoffmann Eitle
(86) International application number: PCT/JP2021/017702
(87) International publication number: WO 2022/239065

(57) **Abstract**

There is provided a power supply unit of an aerosol generation device and a method capable of properly determining occurrence of an abnormality with which use of the power supply unit should be inhibited. The power supply unit comprises control means for controlling a temperature of a load that heats an aerosol source and first holding means for holding first information indicating whether an abnormality associated with the load is detected by means different from the control means. If it is detected that the first information changes from a state representing that no abnormality is detected to a state representing that an abnormality is detected during a period from a start to an end of temperature control of the load, the control means determines that an abnormality with which use of the power supply unit should be inhibited has occurred.

## Description

### TECHNICAL FIELD

The present invention relates to a power supply unit for an aerosol generation device, and a method executed by the power supply unit for the aerosol generation device.

### BACKGROUND ART

An aerosol generation device such as an electronic cigarette has a configuration for heating a liquid used to form aerosol. PTL 1 discloses an aerosol generation device in which upon detecting overheat of a heater, a controller limits or turns off power supply from a battery to the heater.

### CITATION LIST

### PATENT LITERATURE

PTL 1: Japanese Patent Laid-Open No. 2020-505002

### SUMMARY OF INVENTION

### TECHNICAL PROBLEM

In PTL 1, even if the controller detects overheat of the heater, use of the aerosol generation device after that cannot be inhibited. For this reason, overheat of the heater may be repeated.

It is an object of the present invention to provide a power supply unit for an aerosol generation device capable of appropriately determining occurrence of an abnormality with which use of the device should substantially be inhibited, and a method therefor.

### SOLUTION TO PROBLEM

In view of the above problem, according to the first aspect, there is provided a power supply unit for an aerosol generation device, comprising:
control means for controlling a temperature of a load that heats an aerosol source; and
first holding means for holding first information indicating whether an abnormality associated with the load is detected by means different from the control means,
wherein if it is detected that the first information changes from a state representing that no abnormality is detected to a state representing that an abnormality is detected during a period from a start to an end of temperature control of the load, the control means determines that an abnormality with which use of the power supply unit should be inhibited has occurred.

According to the second aspect, there is provided the power supply unit according to claim 1, wherein
in addition to detecting that the first information changes from the state representing that no abnormality is detected to the state representing that the abnormality is detected during the period,
if it is determined that the temperature of the load is not less than a predetermined threshold, the control means determines that the abnormality with which use of the power supply unit should be inhibited has occurred.

According to the third aspect, there is provided the power supply unit according to claim 1, further comprising second holding means for holding second information indicating whether an abnormality different from the abnormality associated with the load is detected,
wherein in addition to detecting that the first information changes from the state representing that no abnormality is detected to the state representing that the abnormality is detected during the period,
if it is determined that the temperature of the load is not less than a predetermined threshold, and the second information represents that the abnormality is detected, the control means determines that the abnormality with which use of the power supply unit should be inhibited has occurred.

According to the fourth aspect, there is provided the power supply unit according to claim claim 3, wherein the second information represents whether one of an abnormality associated with a power supply of the power supply unit and an abnormality associated with a temperature of a case that constitutes a surface of the power supply unit is detected.

According to the fifth aspect, there is provided the power supply unit according to any one of claims 2 to 4, wherein the control means performs the temperature control of the load based on the temperature of the load detected based on a resistance value of the load.

According to the sixth aspect, there is provided the power supply unit according to claim 5, wherein if it is detected that the first information changes from the state representing that no abnormality is detected to the state representing that the abnormality is detected during the period, the control means acquires the temperature of the load from detection means that detects the temperature of the load.

According to the seventh aspect, there is provided the power supply unit according to any one of claims 1 to 6, wherein the control means performs the determination at the time of starting up as well.

According to the eighth aspect, there is provided the power supply unit according to claim 7, wherein the control means writes predetermined information in nonvolatile storage means when starting the temperature control of the load, and erases the predetermined information from the storage means when ending the temperature control of the load.

According to the ninth aspect, there is provided the power supply unit according to claim 8, wherein the first holding means holds the first information held before reset of the control means even after the reset of the control means.

According to the tenth aspect, there is provided the power supply unit according to claim 9, wherein at the time of starting up after the reset, if the predetermined information exists in the storage means, and the information held by the first holding means represents that the abnormality is detected, the control means determines that the abnormality with which use of the power supply unit should be inhibited has occurred.

According to the eleventh aspect, there is provided the power supply unit according to any one of claims 1 to 10, wherein upon determining that the abnormality with which use of the power supply unit should be inhibited has occurred, the control means writes, in nonvolatile storage means, information indicating that the abnormality with which use of the power supply unit should be inhibited has occurred.

According to the twelfth aspect, there is provided the power supply unit according to claim 11, wherein if the information indicating that the abnormality with which use of the power supply unit should be inhibited has occurred exists in the nonvolatile storage means at the time of starting up, the control means disables the starting up of the power supply unit.

According to the thirteenth aspect, there is provided the power supply unit according to any one of claims 1 to 12, wherein upon determining that the abnormality with which use of the power supply unit should be inhibited has occurred, the control means inhibits heating of the load.

According to the fourteenth aspect, there is provided a method executed by control means that is comprised in a power supply unit for an aerosol generation device and for controlling a temperature of a load configured to heat an aerosol source, wherein the power supply unit further comprises first holding means for holding first information indicating whether an abnormality associated with the load is detected by means different from the control means, the method comprising:
if it is detected that the first information changes from a state representing that no abnormality is detected to a state representing that an abnormality is detected during a period from a start to an end of temperature control of the load, determining that an abnormality with which use of the power supply unit should be inhibited has occurred.

### ADVANTAGEOUS EFFECTS OF INVENTION

By the configuration, according to the present invention, it is possible to provide a power supply unit for an aerosol generation device capable of appropriately determining occurrence of an abnormality with which use of the device should substantially be inhibited, and a method therefor.

### BRIEF DESCRIPTION OF DRAWINGS

Fig. 1 is a view showing an example of the outer appearance of a power supply unit for an aerosol generation device according to the embodiment;
Fig. 2 is a perspective view showing an example of the internal configuration of the power supply unit according to the embodiment;
Fig. 3 is a view showing an example of the entire circuit configuration of the power supply unit according to the embodiment;
Fig. 4 is a chart showing an example of a temperature control pattern;
Fig. 5 is a view showing a part excerpted from Fig. 3;
Fig. 6 is a view showing an example of battery abnormality conditions in the power supply unit according to the embodiment;
Fig. 7 is a flowchart concerning a temperature control operation of the power supply unit according to the embodiment; and
Fig. 8 is a flowchart concerning start up processing of the power supply unit according to the embodiment.

### DESCRIPTION OF EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

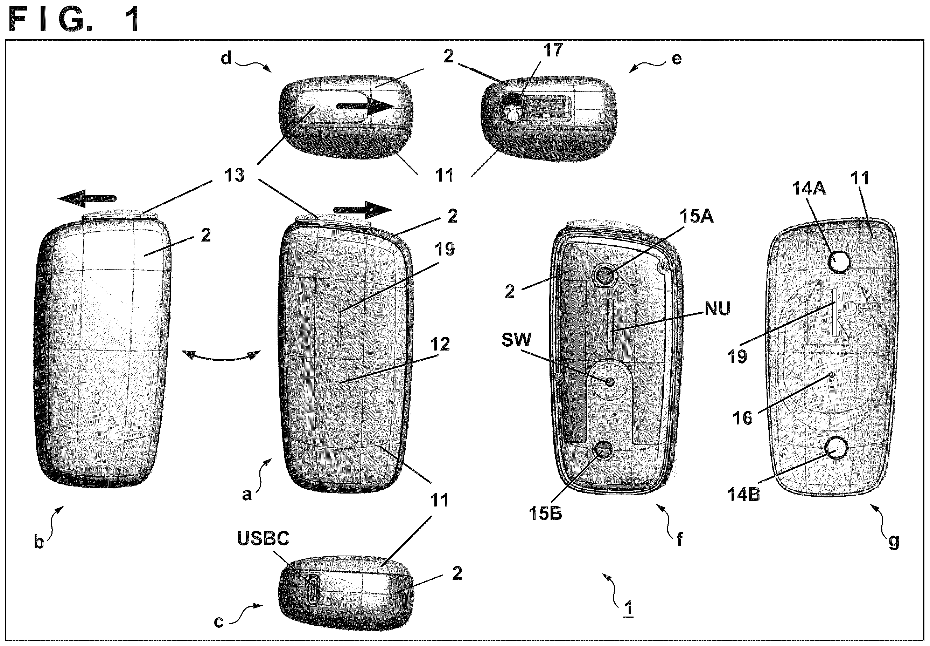

Fig. 1 is an outer appearance perspective view schematically showing an example of the configuration of a power supply unit 1 for an aerosol generation device according to an embodiment of the present invention. The power supply unit 1 includes a case 2 having a substantially rectangular parallelepiped shape with round corners. The case 2 forms the surface of the power supply unit 1. Here, a surface shown in a of Fig. 1 is defined as a front surface, and a surface shown in b is defined as a back surface for the descriptive convenience. In addition, a surface shown in c of Fig. 1 is defined as a bottom surface, and a surface shown in d is defined as a top surface.

The power supply unit 1 includes the housing (case) 2, and a front panel 11 detachably attached to the case 2. In Fig. 1, f shows a state in which the front panel 11 is removed from the state shown in a. Also, g of Fig. 1 shows the state of the front panel 11 viewed from inside. The front panel 11 functions as the front cover of the case 2, and a user can freely exchange the front panel 11 to customize the outer appearance.

The inner surface of the front panel 11 and the front surface of the case 2 are provided with two pairs of magnets 14A and 14B and magnets 15A and 15B at opposite positions. Since the magnets 14Aand 15A attract each other, and the magnets 14B and 15B attract each other, the magnetic force holds the front panel 11 in front of the case 2.

Additionally, a pressable switch SW and a light emitting unit NU are provided in front of the case 2. The inner surface of the front panel 11 is provided with a convex portion 16 at a position facing the switch SW. If a vicinity 12 of the center of the front panel 11 is pressed in a state in which the front panel 11 is attached, the switch SW can indirectly be pressed via the convex portion 16. Note that it is also possible to directly press the switch SW in a state in which the front panel 11 is detached. In the light emitting unit NU, a plurality of light emitting elements (for example, LEDs) are arranged in a row. The state of the light emitting unit NU can be observed through a window 19 provided in the front panel 11.

An openable/closable slider 13 is provided on the top surface of the case 2. When the slider 13 is moved in the direction of an arrow, a heater chamber 17 appears, as shown in e of Fig. 1. The slider 13 is not illustrated in e for the sake of convenience. The heater chamber 17 is a tubular space whose horizontal cross section has an elliptical shape (long round rectangular shape), and heats a stick or a cartridge inserted into the heater chamber 17. The stick has a cylindrical shape, and the diameter of its horizontal cross section is made larger than the short diameter of the horizontal cross section of the heater chamber 17. Hence, when inserted into the heater chamber 17, the stick is compressed in the radial direction. This improves contactability between the outer surface of the stick and the heater chamber 17 and also increases the contact area. It is therefore possible to efficiently heat the stick. This can improve the amount or flavor of aerosol generated from the stick.

If the slider 13 is moved to a position (open position) to expose the heater chamber 17 in a state in which the front panel 11 is attached, and that the switch SW is pressed continuously for a predetermined time (for example, several sec) is detected, the power supply unit 1 recognizes this as a heating start instruction and starts a heating operation.

Note that the stick to be heated by the heater chamber 17 may contain only an aerosol source or may contain an aerosol source and a flavor material. The aerosol source can contain, for example, a liquid such as a polyhydric alcohol such as glycerin or propylene glycol. As a detailed example, the aerosol source can contain a solution mixture of glycerin and propylene glycol. Alternatively, the aerosol source may contain medicament or herbal medicine. Alternatively, the aerosol source may contain a flavoring agent such as menthol. Alternatively, the aerosol source may contain nicotine in a liquid phase. The aerosol source may be a liquid, a solid, or a mixture of a liquid and a solid. A vapor source such as water may be used in place of the aerosol source or in addition to the aerosol source. The stick may contain a carrier for carrying the aerosol source. The carrier itself may be a solid aerosol source. The carrier may contain a sheet made of a raw material derived from a tobacco leaf.

A connector USBC configured to connect an external device is provided in the bottom surface of the case 2. Here, the connector USBC is assumed to be a receptacle complying with the USB Type-C standard. When charging the power supply unit 1, an external device (a USB charger, a mobile battery, a personal computer, or the like) capable of supplying power in accordance with, for example, the USB PD standard is connected to the connector USBC. Note that the connector USBC may comply with a standard other than the USB Type-C standard. Note that a power receiving coil for noncontact charge may be provided in the power supply unit 1 in place of the connector USBC or in addition to the connector USBC.

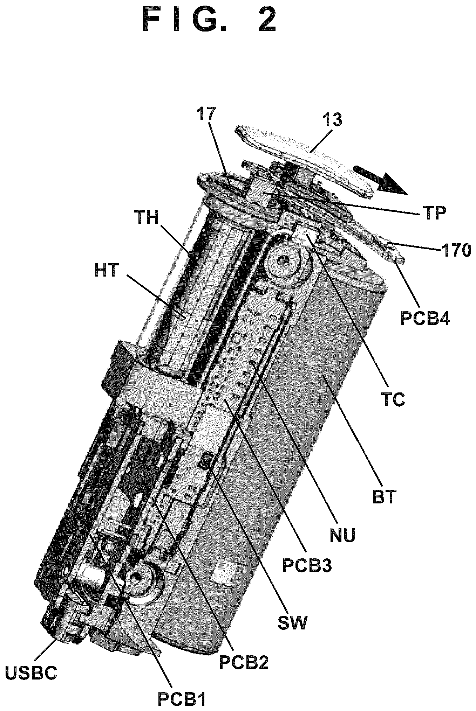

Fig. 2 is a perspective view schematically showing a state in which the case is detached from the power supply unit 1. The same reference numerals as in Fig. 1 denote the same constituent elements in Fig. 2. A heater unit HT (to be simply referred to as a heater HT hereinafter) is a load that is provided on the outer periphery of the heater chamber 17 and heats the heater chamber 17 by consuming power supplied from the power supply and thus heats the aerosol source. Although not illustrated in Fig. 2, the heater HT is covered with a heat insulating material. A heater thermistor TH attached to the heat insulating material of the heater HT is a temperature sensor that indirectly measures the temperature of the heater HT. Note that the heater HT may use an induction heating method. In this case, the heater HT includes at least a coil for electromagnetic induction. A susceptor (metal piece) that receives a magnetic field sent from the coil for electromagnetic induction may be included in the heater HT or incorporated in the stick.

A puff thermistor TP is a suction sensor arranged at the upper end portion of the heater chamber 17. Suction can be detected using the fact that when aerosol is sucked, a temperature detected by the puff thermistor TP varies.

A case thermistor TC is provided near the inner surface of the front surface of the case 2 and detects a case temperature.

A battery BT is chargeable and is, for example, a lithium ion secondary battery. The battery BT is a power supply that supplies basic power of the power supply unit 1. The battery BT is attached at the time of manufacturing, and the power supply unit 1 is shipped in a state (sleep state) in which power is supplied to most constituent elements except the heater HT and the thermistors TH, TC, and TP.

A detector 170 is an opening/closing sensor that detects opening/closing of the slider 13, and may be an integrated circuit (Hall IC) using a Hall element. The circuits of the power supply unit 1 are distributively arranged on four circuit boards PCB1 to PCB4.

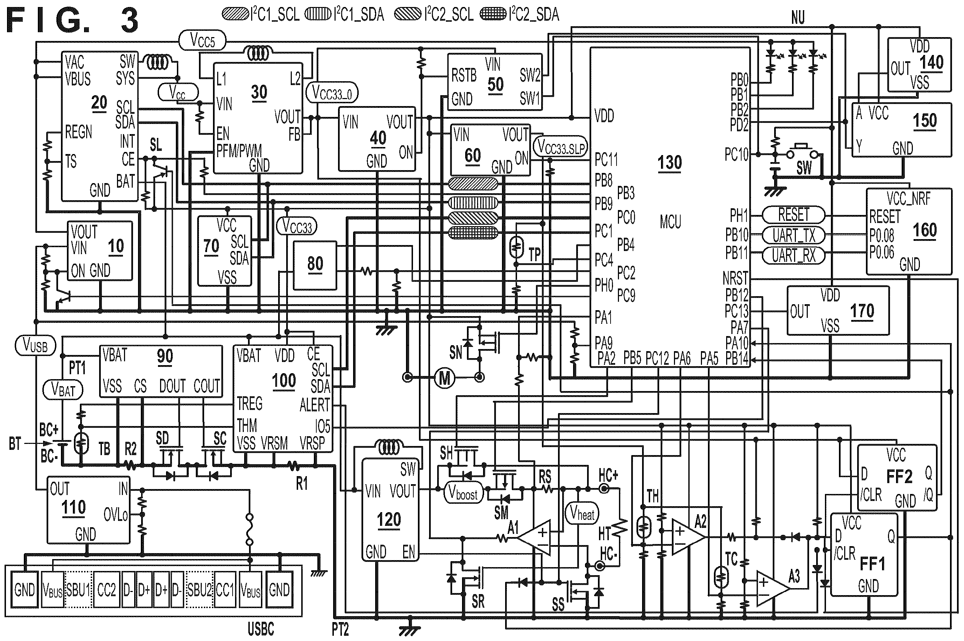

The operations of components that form the power supply unit 1 will be described with reference to Fig. 3. The positive electrode of the battery BT is electrically connected to a first power supply connector BC+, and the negative electrode of the battery BT is electrically connected to a second power supply connector BC-. The potential of the positive electrode of the battery BT can be supplied to the VBAT terminal of a protection circuit 90, the VBAT terminal of a battery monitoring circuit 100, the VIN terminal of a transformation circuit 120, the BAT terminal of a charge circuit 20, and the potential input terminal of a switch circuit 80.

The protection circuit 90 measures, using a resistor R2 arranged in a path to which a current output from the battery BT flows, the current flowing to the path, and protects the battery BT in accordance with the current. The protection circuit 90 measures the output voltage of the battery BT using the input to the VBAT terminal, and protects the battery BT in accordance with the measured output voltage. The battery monitoring circuit 100 can measure the state of the battery BT using a resistor R1 arranged in the path to which the current output from the battery BT flows.

An overvoltage protection circuit 110 receives a voltage V_{BUS} supplied from the connector USBC serving as a power feeder connector and outputs a voltage V_{USB} to a V_{USB} line. The overvoltage protection circuit 110 can function as a protection circuit which, even if the voltage V_{BUS} supplied from the connector USBC is a voltage larger than a prescribed voltage value, lowers to the voltage V_{BUS} to the prescribed voltage value and supplies it to the output side of the overvoltage protection circuit 110. The prescribed voltage value may be set based on a voltage value input to the OVLo terminal.

A transformation circuit 120 is a DC/DC converter that transforms a power supply voltage V_{BAT} supplied from the battery BT to generate a heater voltage V_{BOOST} used to drive the heater HT. The transformation circuit 120 can be a step-up circuit, a step-up/down circuit, or a step-down circuit. The heater HT is arranged to heat the aerosol source. The positive-side terminal of the heater HT can electrically be connected to a first heater connector HC+, and the negative-side terminal of the heater HT can electrically be connected to a second heater connector HC-.

The heater HT may be attached to the power supply unit 1 in a form in which the heater can be detached only when destroyed (for example, soldering) or in a form in which the heater can be detached without destruction. Note that in this specification, electrical connection using "connector" will be described as any of a form in which elements can be separated from each other only when destroyed and a form in which elements can be separated from each other without destruction, unless otherwise specified.

An MCU (Micro Controller Unit) 130 is a processor-based control circuit including a processor capable of executing a program, memories (a ROM and a RAM), an interface, and the like. The MCU 130 loads a program into the RAM provided in the MCU 130 and executes it, thereby controlling the operation of the power supply unit 1. The program to be executed by the MCU 130 can exist in an internal memory (ROM) or a nonvolatile memory 70, or in both of them.

The MCU 130 controls supply of power to the heater HT configured to heat the aerosol source using the power supplied from the battery BT. In another viewpoint, the MCU 130 controls heat generation of the heater HT configured to heat the aerosol source using the power supplied from the battery BT. In still another viewpoint, the MCU 130 controls supply of power to the heater HT and a charge operation of the battery BT.

When causing the heater HT to generate heat, the MCU 130 turns on a switch SH and a switch SS and turns off a switch SM. Thus, the heater voltage V_{BOOST} can be supplied from the transformation circuit 120 to the heater HT via the switch SH. When measuring the temperature or resistance of the heater HT, the MCU 130 turns off the switch SH and turns on the switch SM and the switch SS. Thus, the heater voltage V_{BOOST} can be supplied from the transformation circuit 120 to the heater HT via the switch SM.

When measuring the temperature or resistance of the heater HT, an operational amplifier A1 supplies an output according to the voltage between the positive-side terminal and the negative-side terminal of the heater HT, in other words, the voltage between the first heater connector HC+ and the second heater connector HC- to the PA7 terminal of the MCU 130. The operational amplifier A1 may be understood as a measurement circuit that measures the resistance value or temperature of the heater HT.

A shunt resistor RS can be arranged in a path that electrically connects the switch SM and the first heater connector HC+. The resistance value of the shunt resistor RS can be decided such that a switch SR is ON in a period in which the heater HT is heated, and the switch SR is OFF in a period in which the temperature or resistance value of the heater HT is measured.

If a heating start instruction is detected, the MCU 130 controls the temperature of the heater HT in accordance with a predetermined temperature control pattern. The temperature control pattern is also called a heating profile, and defines how to control the temperature of the heater HT in a period from the start to the end of heating. For example, the temperature control pattern may define a length (time) and a target temperature for each section. The temperature control pattern is also called a heating profile. The MCU 130 repetitively executes detection of the temperature of the heater HT and control of the power supply time to the heater HT based on the detected temperature of the heater HT, thereby implementing a temperature changed defined by the temperature control pattern.

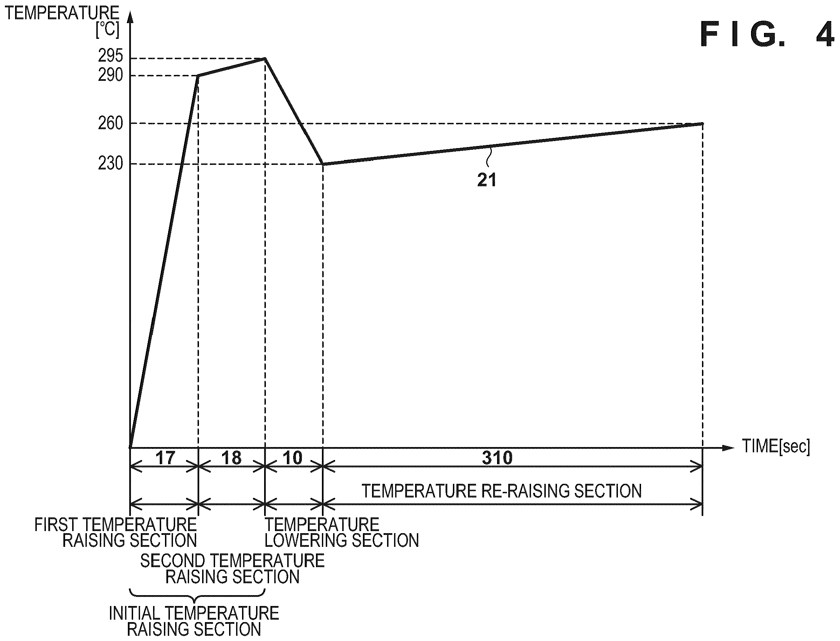

Fig. 4 is a chart showing an example of temperature control of the heater HT according to a temperature control pattern. Here, assume that temperature control is performed to reach the target temperature at the end of each section. The abscissa represents time (sec), and the ordinate represents the temperature of the heater HT. A number shown in each section represents the length of the section.

An initial temperature raising section starting with the start of heating includes a first temperature raising section and a second temperature raising section following it. The length of the first temperature raising section is 17 sec, and the target temperature is 290°C. The length of the second temperature raising section is 18 sec, and the target temperature is 295°C. The MCU 130 controls power supply to the heater HT such that the temperature reaches 290°C in the first temperature raising section, and controls the operation of the heater HT such that the temperature reaches 295°C in the second temperature raising section following it. When the initial temperature raising section is divided into a plurality of sections, and the temperature is made to reach the target temperature (here 295°C) of the initial temperature raising section via one or more intermediate target temperatures (here, 290°C), the probability that the temperature reaches the final target temperature (295°C) in the initial temperature raising section can be increased.

In addition, if the temperature gradient (the temperature raising width per unit time) in the last temperature raising section of the plurality of temperature raising sections forming the initial temperature raising section is made more moderate than in other temperature raising sections, overshoot for the final target temperature is less likely to occur. Note that the initial temperature raising section may include a temperature maintaining section.

The section following the initial temperature raising section is a section (temperature lowering or slow cooling section) in which the temperature of the heater HT is lowered. The length of the temperature lowering section is 10 sec, and the target temperature is 230°C. In the temperature lowering section, the MCU 130 does not supply power to the heater HT and waits until the heater HT is cooled by ambient air. However, a configuration for actively cooling the heater, like a cooling fan, may be provided.

When the temperature lowering section ends, a temperature re-raising section starts. The length is 310 sec, and the target temperature is 260°C. If the temperature re-raising section ends, or movement of the slider 13 to a position (closed position) at which the heater chamber 17 is hidden is detected, the MCU 130 stops power supply to the heater HT and ends the temperature control of the heater HT.

Note that if power supply to the heater is not performed in the temperature lowering section, the resistance value of the heater HT cannot be measured in the temperature lowering section. For this reason, in the temperature lowering section, instead of supplying power to the heater HT and measuring the resistance value, the MCU 130 acquires the temperature of the heater HT using the heater thermistor TH connected to the PA6 terminal.

Thus, in the period in which the temperature of the heater HT is controlled in accordance with the temperature control pattern, the MCU 130 periodically measures the temperature of the heater HT. Hence, if an abnormality (overheat) occurs in the temperature of the heater HT, it can be detected.

Referring back to Fig. 3, if the switch SR is formed by an n-channel MOSFET, the drain terminal of the switch SR is connected to the output terminal of the operational amplifier A1, the drain terminal of the switch SR is connected to the output terminal of the operational amplifier A1, the gate terminal of the switch SR is connected between the shunt resistor RS and the first heater connector HC+, and the source terminal of the switch SR is connected to ground (GND). A voltage having a value obtained by dividing the heater voltage V_{BOOST} mainly by the shunt resistor RS and the heater HT is input to the gate terminal of the switch SR. The resistance value of the shunt resistor RS can be decided such that the value obtained by the voltage division is equal to or larger than the threshold voltage of the switch SR. In addition, a current flowing to the heater HT in a case where the switch SH is turned off by the shunt resistor RS, and the switch SM and the switch SS are turned on is smaller than a current flowing to the heater HT in a case where the switch SH and the switch SS are turned on, and the switch SM is turned off. It is therefore possible to suppress the change of the temperature of the heater HT caused by the current flowing to the heater HT when measuring the temperature or resistance of the heater HT.

A load switch 10 electrically disconnects the VIN terminal from the VOUT terminal when low level is input to the ON terminal. When high level is input to the ON terminal, the load switch 10 electrically connects the VIN terminal and the VOUT terminal and outputs a voltage Vccs from the VOUT terminal to a Vccs line. The voltage value of the voltage Vccs is, for example, 5.0 [V]. The Vccs line is connected to the VBUS terminal and the VAC terminal of the charge circuit 20 to be described later and the light emitting unit NU. Note that the collector terminal of an npn-type bipolar transistor is connected to the ON terminal of the load switch 10. The emitter terminal of the bipolar transistor is connected to ground, and the base terminal is connected to the PC9 terminal of the MCU 130. That is, the MCU 130 adjusts the potential of the PC9 terminal, thereby controlling opening/closing of the load switch via the bipolar transistor.

The charge circuit 20 has a charge mode. In the charge mode, the charge circuit 20 electrically connects the SYS terminal and the BAT terminal internally. Hence, the charge voltage can be supplied from the BAT terminal to the battery BT via a first conductive path PT1 using the voltage Vccs supplied to the VBUS terminal via the Vccs line. The charge circuit 20 preferably generates an appropriate charge voltage by stepping down the voltage Vccs. The charge mode can be enabled or activated by supplying low level to the ICE terminal. A Vcc line is connected to the VIN terminal and the EN terminal of a transformation circuit 30 to be described later.

The charge circuit 20 can have a power-pass function. If the power-pass function is set enabled, the charge circuit 20 supplies a voltage Vcc to the Vcc line using the voltage Vccs supplied to the VBUS terminal via the Vccs line or the power supply voltage V_{BAT} supplied from the battery BT to the BAT terminal via the first conductive path PT1. More specifically, if the power-pass function is set enabled in a state in which the voltage V_{USB} can be used, the charge circuit 20 electrically connects the VBUS terminal and the SW terminal internally, and supplies the voltage Vcc to the Vcc line using the voltage Vccs supplied via the Vccs line. Also, if the power-pass function is set enabled in a state in which the voltage V_{USB} cannot be used, the charge circuit 20 electrically connects the VBUS terminal and the SW terminal internally, and supplies the voltage Vcc to the Vcc line using the power supply voltage V_{BAT} supplied from the battery BT to the BAT terminal via the first conductive path PT1.

The charge circuit 20 has an OTG (On-The-GO) function. If the OTG function is set enabled, the charge circuit 20 supplies the voltage Vccs from the VBUS terminal to the Vccs line using the power supply voltage V_{BAT} supplied from the battery BT to the BAT terminal via the first conductive path PT1. When generating the voltage Vccs from the power supply voltage V_{BAT}, the charge circuit 20 preferably supplies the voltage Vccs by stepping up the power supply voltage V_{BAT} such that the voltage supplied to the light emitting unit NU is the same as or similar to a voltage obtained when generating the voltage Vccs from the voltage V_{USB}. With this configuration, the operation of the light emitting unit NU is stabilized. When high level is supplied to the ICE terminal, the charge circuit 20 can operate using one function of the power-pass function and the OTG function, which is set by default or is set enabled by the MCU 130.

The transformation circuit 30 is a DC/DC converter that can be a step-up circuit, a step-up/down circuit, or a step-down circuit, and is enabled by supplying the voltage Vcc to the Vcc line. More specifically, the transformation circuit 30 is enabled by inputting a high-level signal to the EN terminal. Since the VIN terminal and the EN terminal are connected to the Vcc line, the transformation circuit 30 is enabled by supplying the voltage Vcc to the Vcc line. The transformation circuit 30 supplies a voltage V_{CC33_0} from the VOUT terminal to a V_{CC33_0} line. The voltage value of the voltage V_{CC33_0} is, for example, 3.3 [V]. The V_{CC33_0} line is connected to the VIN terminal of a load switch 40 to be described later, the VIN terminal and the RSTB terminal of a reboot controller 50 to be described later, and the VCC terminal and the D terminal of an FF2 to be described later.

The load switch 40 electrically disconnects the VIN terminal from the VOUT terminal when low level is input to the ON terminal. When high level is input to the ON terminal, the load switch 40 electrically connects the VIN terminal and the VOUT terminal and outputs a voltage V_{CC33_}from the VOUT terminal to a V_{CC33_}line. The voltage value of the voltage V_{CC33_}is, for example, 3.3 [V]. The V_{CC33_}line is connected to the VIN terminal of a load switch 60 to be described later, the VCC terminal of the nonvolatile memory 70, the VDD terminal and the CE terminal of the battery monitoring circuit 100 to be described later, the VDD terminal of the MCU 130, the VDD terminal of a detector 140 to be described later, the VCC terminal of a Schmitt trigger circuit 150 to be described later, the VCC_NRF terminal of a communication interface circuit 160 to be described later, the VDD terminal of the detector 170 to be described later, the VCC terminal and the D terminal of an FF1 to be described later, the positive power supply terminal of the operational amplifier A1, and the positive power supply terminal of an operational amplifier A2 to the described later. The VIN terminal of the load switch 40 is electrically connected to the VOUT terminal of the transformation circuit 30, and the voltage V_{CC33_0} is supplied from the transformation circuit 30. Not to make the circuit boards of the power supply unit 1 complex, the voltage value of the voltage V_{CC33_0} and the voltage value of the voltage Vccss preferably substantially equal.

The reboot controller 50 outputs low level from the RSTB terminal when low level is supplied to the SW1 terminal and the SW2 terminal for a predetermined time. The RSTB terminal is electrically connected to the ON terminal of the load switch 40. Hence, when low level is supplied to the SW1 terminal and the SW2 terminal of the reboot controller 50 for a predetermined time, the load switch 40 stops outputting the voltage Vccss from the VOUT terminal. If the output of the voltage Vccss from the VOUT terminal of the load switch 40 stops, supply of the voltage Vccss to the VDD terminal (power supply terminal) of the MCU 130 is shut off, and therefore, the MCU 130 stops the operation.

Here, if the front panel 11 is detached from the power supply unit 1, low level is supplied from the detector 140 to the SW2 terminal of the reboot controller 50 via the Schmitt trigger circuit 150. When the switch SW is pressed, low level is supplied to the SW1 terminal of the reboot controller 50. Hence, if the switch SW is pressed in a state in which the front panel 11 is detached from the power supply unit 1 (the state shown in f of Fig. 1), low level is supplied to the SW1 terminal and the SW2 terminal of the reboot controller 50. If low level is supplied to the SW1 terminal and the SW2 terminal continuously for a predetermined time (for example, several sec), the reboot controller 50 recognizes that a reset or restart instruction is input to the power supply unit 1. The reboot controller 50 preferably no longer outputs low level from the RSTB terminal after outputting low level from the RSTB terminal.

If the reboot controller 50 outputs low level from the RSTB terminal, low level is input to the ON terminal of the load switch 40, the load switch 40 electrically disconnects the VIN terminal from the VOUT terminal, and the voltage V_{CC33_}is no longer output to the V_{CC33_}line. Thus, the MCU 130 stops the operation. After that, if the reboot controller 50 no longer outputs low level from the RSTB terminal, the voltage V_{CC33_0} of high level is input to the ON terminal of the load switch 40. Hence, the load switch 40 electrically connects the VIN terminal and the VOUT terminal and outputs the voltage Vccss from the VOUT terminal to the V_{CC33_}line again. Thus, the MCU 130 that has stopped the operation can be restarted.

The load switch 60 electrically disconnects the VIN terminal from the VOUT terminal when low level is input to the ON terminal. When high level is input to the ON terminal, the load switch 60 electrically connects the VIN terminal and the VOUT terminal and outputs the voltage V_{CC33_SLP} from the VOUT terminal to a V_{CC33_SLP} line. The voltage value of the voltage V_{CC33_SLP} is, for example, 3.3 [V]. The V_{CC33_SLP} line is connected to the puff thermistor TP to be described later, the heater thermistor TH to be described later, and the case thermistor TC to be described later. The ON terminal of the load switch 60 is electrically connected to the PC11 terminal of the MCU 130. The MCU 130 changes the logic level of the PC11 terminal from high level to low level when shifting to a sleep mode, and changes the logic level of the PCll terminal from low level to high level when shifting from the sleep state to an active state. In other words, the voltage V_{CC33_SLP} cannot be used in the sleep state, and can be used when shifting from the sleep state to the active state.

The power supply unit 1 can include the puff thermistor TP (for example, an NTC thermistor or a PTC thermistor) that forms a puff sensor configured to detect a puff (suction) operation by the user. The puff thermistor TP can be arranged to detect, for example, a temperature change in an air channel caused by puff. Note that the puff thermistor TP is merely an example of a puff sensor. In place of the puff thermistor TP, a microphone capacitor, a pressure sensor, a flow rate sensor, a flow velocity sensor, or the like may be used as the puff sensor. The power supply unit 1 may include a vibrator M. The vibrator M can be activated by turning on, for example, a switch SN. The switch SN can be formed by a transistor, and a control signal can be supplied from the PH0 terminal of the MCU 130 to the base or gate of the transistor. Note that the power supply unit 1 may include a driver configured to control the vibrator M.

The power supply unit 1 can include the heater thermistor TH (for example, an NTC thermistor or a PTC thermistor) configured to detect the temperature of the heater HT. The temperature of the heater HT may be detected indirectly by detecting the temperature near the heater HT. The operational amplifier A2 can output a voltage according to the resistance value of the thermistor TH, in other words, a voltage according to the temperature of the heater HT.

The power supply unit 1 can include the case thermistor TC (for example, an NTC thermistor or a PTC thermistor) configured to detect the temperature of the housing (case) 2 of the power supply unit. The temperature of the case 2 may be detected indirectly by detecting the temperature near the case 2. An operational amplifier A3 outputs a voltage according to the resistance value of the thermistor TC, in other words, a voltage according to the temperature of the case 2.

The detector 140 can be configured to detect that the front panel 11 is detached from the power supply unit 1. The output of the detector 140 can be supplied to the SW2 terminal of the reboot controller 50 and the PD2 terminal of the MCU 130 via the Schmitt trigger circuit 150. One terminal of the switch SW can be connected to the V_{CC33_}line, the SW1 terminal of the reboot controller 50, and the PC10 terminal of the MCU 130. The other terminal of the switch SW can be connected to ground. Thus, when the switch SW is pressed, low level can be supplied to the SW1 terminal of the reboot controller 50 and the PC 10 terminal of the MCU 130. When the switch SW is not pressed, high level can be supplied to the SW1 terminal of the reboot controller 50 and the PC10 terminal of the MCU 130.

The detector 170 can be configured to detect opening/closing of the slider 13. The output of the detector 170 can be supplied to the PC13 terminal of the MCU 130. Each of the detectors 140 and 170 can be formed by, for example, an integrated circuit (Hall IC) using a Hall element.

The communication interface circuit 160 provides, to the MCU 130, a function of wirelessly communicating with an external apparatus such as a smartphone, a portable telephone, or a personal computer. The communication interface circuit 160 may be, for example, a communication interface circuit complying with one or more arbitrary wireless communication standards such as Bluetooth^{®}.

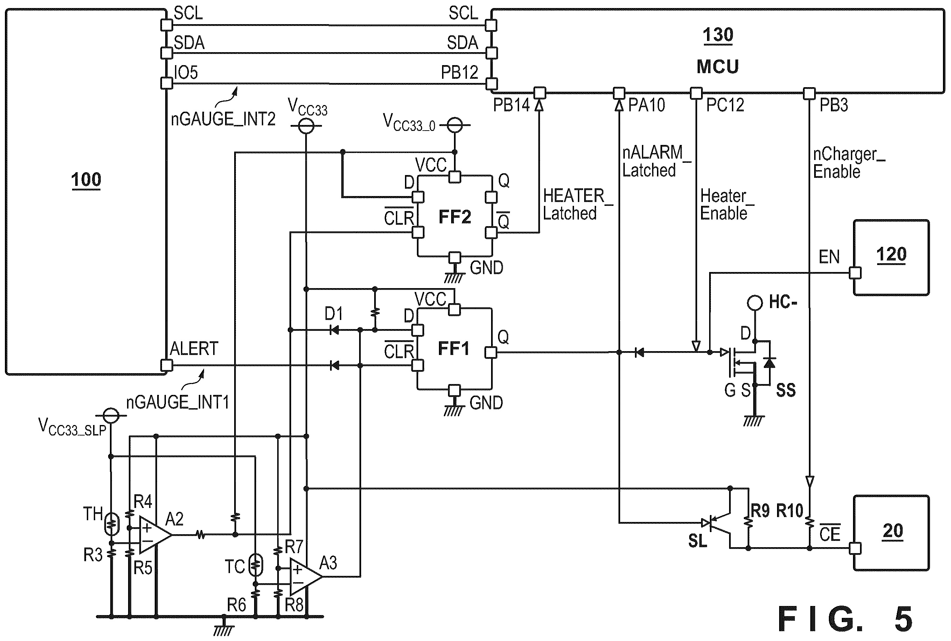

Fig. 5 is a circuit diagram showing components concerning operations using the FF (Flip-Flop) 1 and FF2, which are extracted from the constituent elements described with reference to Fig. 3. The FF1 and FF2 are holding circuits that hold, as low level or high level, 1-bit information (0 to 1) representing whether an abnormality concerning the power supply unit 1 is detected or not by a means different from the MCU 130. More specifically, the FF1 holds information (second information) representing the presence/absence of abnormality detection by the battery monitoring circuit 100, the operational amplifier A2, and the operational amplifier A3. In addition, the FF2 holds information (first information) representing the presence/absence of abnormality detection by the operational amplifier A2.

The FF2 outputs a value obtained by inverting the value of held information as a HEATER_Latched signal from the /Q terminal. The FF1 outputs the value of held information as an nALARM_Latched signal for the Q terminal. The HEATER_Latched signal and the nALARM_Latched signal are input to the PB14 terminal and the PA10 terminal of the MCU 130, respectively. Hence, the MCU 130 can refer to the information held by the FF1 and the information held by the FF2 by referring to the levels of these terminals.

Each of the FF1 and FF2 includes a /CLR terminal, and changes the value of held information to 0 (low level) if the input level of the /CLR terminal changes from high level to low level. Note that the change of the input level of the /CLR terminal from low level to high level does not affect the value of the held information.

In this embodiment, power is supplied to the FF1 and FF2 via different power supply lines. That is, the voltage V_{CC33_0} is input to the VCC terminal (power supply terminal) of the FF1, and the voltage V_{CC33_}is input to the VCC terminal (power supply terminal) of the FF2. The voltage V_{CC33_0} is continuously supplied even during a period in which supply of the voltage Vccss that drives the MCU 130 is temporarily stopped in a reset procedure. For this reason, even if the reset procedure of the power supply unit 1 is executed, information (the outputs of the Q and /Q terminals) held by the FF2 is held without being erased. On the other hand, since power is supplied to the FF 1 via a power supply line that supplies power to the MCU 130, information held by the FF1 is erased at the time of the reset procedure.

In the FF1 and the FF2, the input to the VCC terminal is input to the D terminal as well. Hence, high level is always input to the D terminal during the operation of the FF1 and FF2. The FF1 and FF2 each include a synchronization terminal (not shown), and if the input to the synchronization terminal changes from low level to high level, hold the input level of the D terminal. If the power supply unit 1 is normally operating, the FF1 and FF2 hold high level, and the nALARM_Latched signal is at high level, and the HEATER_Latched signal is at low level.

An operation when the battery monitoring circuit 100 detects an abnormality concerning the battery BT will be described first. The battery monitoring circuit 100 monitors information (the current amount, the temperature, and the voltage) of the battery BT. The MCU 130 that is a control circuit periodically requests the information of the battery BT from the battery monitoring circuit 100 via I²C communication, and the battery monitoring circuit 100 notifies the MCU 130 of the information of the battery BT in response to the request. The MCU 130 determines the presence/absence of an abnormality based on the acquired information of the battery BT and a plurality of predetermined abnormality conditions. If any one of the abnormality conditions is satisfied, the MCU 130 executes an operation corresponding to the abnormality condition.

### (Abnormality Conditions)

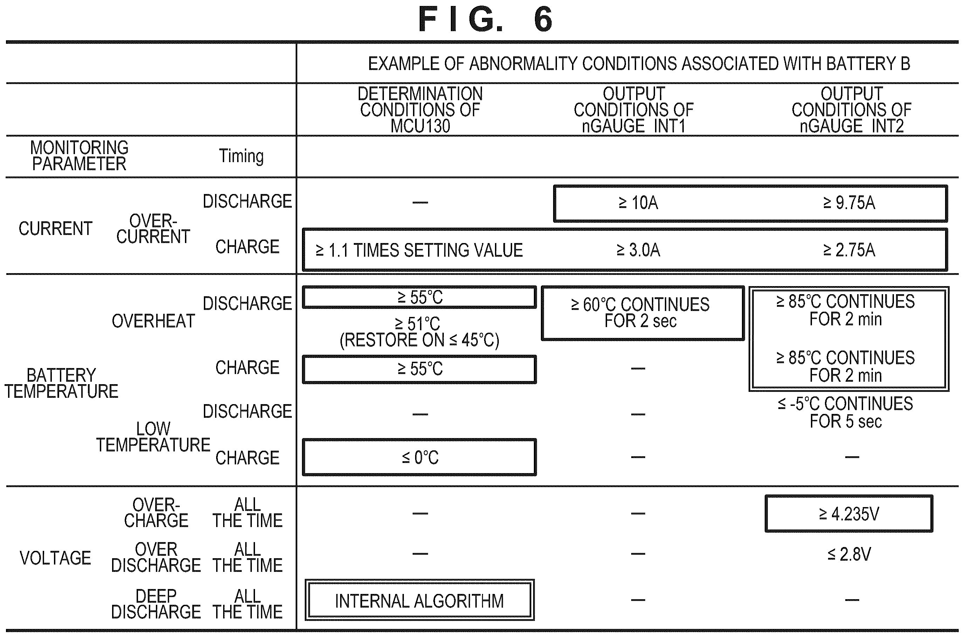

Fig. 6 is a view showing an example of abnormality conditions concerning the battery BT. The determination conditions of the MCU 130 are abnormality conditions that the MCU 130 applies to the information of the battery BT acquired from the battery monitoring circuit 100 via I²C communication. The output conditions of an nGAUGE_INT1 signal and the output conditions of an nGAUGE_INT2 signal are abnormality conditions that the battery monitoring circuit 100 itself applies to the information of the battery BT. If any one of the output conditions of the nGAUGE_INT1 signal is satisfied, the battery monitoring circuit 100 outputs the nGAUGE_INT1 signal of low level from the ALERT terminal. If any one of the output conditions of the nGAUGE_INT2 signal is satisfied, the battery monitoring circuit 100 outputs the nGAUGE_INT2 signal of low level from the IOS terminal. In this way, the state of the battery BT is independently monitored by the MCU 130 and the battery monitoring circuit 100. Thus, for example, even if I²C communication between the MCU 130 and the battery monitoring circuit 100 cannot normally be performed due to some reason, or the MCU 130 does not normally operate due to some reason, the battery monitoring circuit 100 can reliably detect an abnormality of the battery BT and take an appropriate measure.

In Fig. 6, the "Timing" column shows the timings of determining whether an abnormality condition is satisfied. For an abnormality condition with "charge" in the "Timing" column, whether the abnormality condition is satisfied is determined only when the battery BT is being charged by the charge circuit 20. For an abnormality condition with "discharge" in the "Timing" column, whether the abnormality condition is satisfied is determined only when the battery BT is not being charged by the charge circuit 20 (more preferably, only when the heater voltage V_{BOOST} is being applied to the heater HT). For an abnormality condition with "all the time" in the "Timing" column, whether the abnormality condition is satisfied is determined regardless of whether the battery BT is being charged by the charge circuit 20 or not.

In Fig. 6, the presence/absence and the type of a frame for an abnormality condition indicate the degree of abnormality represented by the abnormality condition. More specifically, an abnormality condition without a frame indicates an abnormality of the lowest degree, an abnormality condition with a practical frame indicates an abnormality of a medium degree that needs reset, and an abnormality condition with a double-line frame indicates a serious abnormality (permanent failure). The permanent failure is an abnormality with which use of the power supply unit 1 should substantially be inhibited. The MCU 130 and the battery monitoring circuit 100 each execute an operation according to the degree of abnormality.

Here, if both the output condition of the nGAUGE_INT1 signal and the output condition of the nGAUGE_INT2 signal are set for the same monitoring parameter, like the current amount at the time of charge or discharge of the battery BT, the output condition of the nGAUGE_INT1 signal is set to be stricter. That is, the abnormality conditions are set such that the nGAUGE_INT2 signal is output before the nGAUGE_INT1 signal for the same monitoring parameter. This is because the nGAUGE_INT2 signal is output to the MCU 130 to take a measure against an abnormality under the control of the MCU 130, but the nGAUGE_INT1 signal is used to take a measure against an abnormality by hardware processing without interposing the MCU 130. Basically, software control by the MCU 130 that stably operates is preferentially performed, and hardware control by the nGAUGE_INT1 signal is executed as a means in a case where software control cannot work. An example of the case where software control cannot work is a case where the MCU 130 has frozen.

### (Battery Abnormality Detection by MCU 130)

Abnormality detection of the battery BT and an operation according to the degree of a detected abnormality will be described next. First, the operation of the MCU 130 based on the information of the battery BT acquired by I²C communication will be described. The MCU 130 performs I²C communication with the battery monitoring circuit 100 periodically (for example, at an interval of 1 sec), acquires the information of the battery BT, and determines whether any one of the abnormality conditions shown in Fig. 6 is satisfied.

### (Abnormality of Low Degree)

If it is determined that an abnormal state of the lowest degree is detected (in the example shown in Fig. 5, a case where the temperature of the battery BT is 51°C (inclusive) to 55°C (exclusive) at the time of discharge), the MCU 130 inhibits supply of power (application of the heater voltage V_{BOOST}) from the battery BT to the heater HT. Also, the MCU 130 causes the light emitting unit NU or the vibrator M to notify the error. The MCU 130 also inhibits the charge circuit 20 from charging the battery BT. The MCU 130 also inhibits charge of the battery BT. In the sleep state, the voltages V_{BAT}, V_{CC33}, and V_{CC33_0} are supplied, but the voltage V_{CC33_SLP} is not supplied.

### (Power Supply Inhibition Operation for Heater HT)

The MCU 130 changes a Heater_Enable signal output from the PC12 terminal to low level to turn off the switch SS. Thus, the MCU 130 disconnects the negative terminal HC- of the heater HT from ground. Since the Heater Enable signal is input to the EN terminal of the transformation circuit 120 as well, the transformation circuit 120 stops the operation, and power supply to the heater HT is inhibited.

### (Charge Inhibition Operation of Battery BT)

The MCU 130 changes an nCharger_ Enable signal output from the PB3 terminal to high level. Since the ICE terminal of the charge circuit 20 changes to high level, the charge circuit 20 inhibits charge.

Afterthat, if it is confirmed that the temperature of the battery BT is 45°C or less, the MCU 130 shifts the power supply unit 1 to the sleep state.

### (Abnormality of Medium Degree)

If it is determined that an abnormal state of a medium degree is detected (in the example shown in Fig. 6, a case where the temperature of the battery BT is 55°C or more at the time of discharge), reset (restart) of the power supply unit 1 is necessary. Hence, by the light emitting pattern and/or the light emitting color of the light emitting unit NU, the MCU 130 prompts the user to perform a reset operation. The vibrator M may be used in addition to the light emitting unit NU. Note that if it is determined that an abnormal state of a medium degree is detected, the MCU 130 inhibits power supply from the transformation circuit 120 to the heater HT and charge of the battery BT by the charge circuit 20.

### (ResetProcedure)

In the power supply unit 1 according to this embodiment, if both
- detachment of the front panel 11, and
- pressing of the switch SW for a predetermined time longer than the heating start instruction
are detected, it is recognized that the reset operation is performed.

More specifically, these conditions are detected by the reboot controller 50. The SW1 terminal of the reboot controller 50 is connected to the switch SW, and the SW2 terminal is connected to the Schmitt trigger circuit 150 that outputs a signal representing attachment/detachment of the front panel 11. If the switch SW is pressed in a state in which the front panel 11 is detached, both the inputs to the SW1 and SW2 terminals change to low level. Thus, the reboot controller 50 starts to perform the reset procedure.

The reboot controller 50 monitors whether the state in which both the SW1 and SW2 terminals are at low level continues until a user-settable reboot delay time (for example, 1 to 20 sec) elapses. During the reboot delay time, the MCU 130 notifies the user of the reset using the light emitting unit NU and the vibrator M.

If the state in which both the SW1 and SW2 terminals are at low level continues for the reboot delay time, the reboot controller 50 changes the output of the RSTB terminal to low level. Thus, the ON terminal of the load switch 40 changes to low level, and the supply of the voltage V_{CC33_}from the VOUT terminal of the load switch 40 and the voltage V_{CC33_SLP} from the VOUT terminal of the load switch 60 stops. This cuts off power supply to the MCU 130, and the MCU 130 stops the operation. That is, the above-described time that is necessary for recognizing the reset instruction and is longer than the heating start instruction, substantially equals the reboot delay time.

If a predetermined time (for example, 0.4 sec) elapses after the RSTB terminal is set to low level, the reboot controller 50 no longer automatically sets the RSTB terminal to low level. Hence, the voltage V_{CC33_0} is input to the ON terminal of the load switch 40 via the V_{CC33_0} line. The supply of the voltage V_{CC33_}from the load switch 40 is resumed, and the MCU 130 starts. That is, the MCU 130 starts if the state in which power is not supplied changes to a state in which power is supplied. If the MCU 130 starts, the power supply unit 1 is set in the sleep state or charge state. The voltage V_{CC33}__{SLP} is not supplied at this point of time. Restarting the MCU 130 may possibly resolve an error such as freeze that has occurred in the MCU 130.

Note that of the abnormalities of the medium degree, an overcurrent at the time of charge is determined to satisfy the condition if a current larger by 1.1 times or more than a current value (to be also referred to as a setting value hereinafter) set in advance to perform CC (Constant-Current) charge in CCCV charge operations to be executed by the charge circuit 20 is detected.

### (Serious Abnormality)

If it is determined that a serious abnormal state is detected (in the example shown in Fig. 6, a case where it is determined, based on the voltage of the battery BT, that deep discharge occurs), the MCU 130 determines that a serious abnormality (permanent failure) has occurred. Note, it is assumed that deep discharge indicates a state in which the discharge of the battery BT progresses beyond the overdischarge state. Note, it is assumed that the overdischarge state indicates a state in which the output voltage of the battery BT is lower than a discharge end voltage. Determination of deep discharge can be performed by a predetermined algorithm. The determination method of deep discharge is not limited, and, for example, if the voltage of the positive electrode of the battery BT is less, deep discharge can be determined.

The permanent failure is an abnormality with which use of the device should substantially be inhibited. For this reason, upon determining that a permanent failure has occurred, the MCU 130 executes an operation for inhibiting the user from using the power supply unit 1. Details of processing of the MCU 130 if it is determined that a permanent failure has occurred will be described later.

### (Battery Abnormality Detection by Battery Monitoring Circuit 100)

An abnormality detection operation for the battery BT, which is performed by the battery monitoring circuit 100 independently of the MCU 130, will be described next.

The battery monitoring circuit 100 monitors the state of the battery BT and determines whether the state satisfies any one of the abnormality conditions shown in Fig. 6. Then, the battery monitoring circuit 100 outputs the nGAUGE_INT1 signal or the nGAUGE_INT2 signal in accordance with the satisfied abnormality condition. The nGAUGE_INT2 signal is input as an interrupt signal from the IOS terminal of the battery monitoring circuit 100 to the PB12 terminal of the MCU 130. That is, the nGAUGE_INT2 signal is output from the IOS terminal of the battery monitoring circuit 100 without waiting for the period of periodical I²C communication with the MCU 130. On the other hand, the nGAUGE_INT1 signal output from the ALERT terminal of the battery monitoring circuit 100 is input not to the MCU 130 but to the /CLR terminal of the FF1 that is a holding circuit.

### (nGAUGE_INT2 Signal)

The nGAUGE_INT2 signal will be described first. The battery monitoring circuit 100 determines whether the periodically acquired information of the battery BT satisfies any one of the abnormality conditions listed as the output conditions of the nGAUGE_INT2 signal. Upon determining that any one of the abnormality conditions is satisfied, the battery monitoring circuit 100 changes the output of the IOS terminal to low level, thus outputs the nGAUGE_INT2 signal, and notifies the MCU 130 of the occurrence of the abnormality via the PB12 terminal.

If the input of the PB12 terminal changes to low level, the MCU 130 recognizes that the battery monitoring circuit 100 detects the abnormality of the battery BT. The MCU 130 then acquires the information of the battery BT from the battery monitoring circuit 100 by I²C communication via SCL and SDA terminals.

The MCU 130 applies the same abnormality condition as the output condition of the nGAUGE_INT2 signal to the acquired information of the battery BT and determines whether the battery BT is in an abnormal state. If one of the abnormality conditions is satisfied, the MCU 130 executes an operation according to the degree of the abnormality represented by the abnormal state. That is, the MCU 130 changes the abnormality condition to be applied to the acquired information of the battery BT depending on whether the information of the battery BT is acquired by periodical I²C communication or by I²C communication responding to a notification (interruption) by the nGAUGE_INT2 signal. If there is a satisfied abnormality condition, the operation to be performed in accordance with the degree of the abnormality represented by the abnormality condition is the same as that in a case where the information of the battery BT is acquired by periodical I²C communication.

Note that for the abnormality condition of the battery temperature (a temperature of 85 °C or more continues for 2 min), the battery monitoring circuit 100 and the MCU 130 use different determination methods. The battery monitoring circuit 100 monitors the periodically acquired information of the battery BT, and upon determining that a temperature of 85°C or more continues for 2 min, outputs the nGAUGE_INT2 signal of low level.

Upon receiving the nGAUGE_INT2 signal of low level, the MCU 130 acquires the information of the battery BT from the battery monitoring circuit 100 at a predetermined period (for example, 1 sec). If the temperature of 85°C is detected continuously a predetermined number of times (for example, five times), it is determined that an abnormality condition is satisfied (a permanent failure has occurred).

In the above-described embodiment, the MCU 130 applies the same abnormality condition as the output condition of the nGAUGE_INT2 signal to the acquired information of the battery BT, and determines whether the battery BT is in an abnormal state and the degree of abnormality.

### (nGAUGE_INT1 Signal)

The nGAUGE_INT1 signal will be described first. The battery monitoring circuit 100 determines whether the periodically acquired information of the battery BT satisfies any one of the abnormality conditions listed as the output conditions of the nGAUGE_INT1 signal. Upon determining that any one of the abnormality conditions is satisfied, the battery monitoring circuit 100 changes the output of the ALERT terminal to low level, thereby outputting the nGAUGE_INT1 signal.

The nGAUGE_INT1 signal is input to the /CLR terminal of the FF1 that is a holding circuit. The /CLR terminal is a negative logic terminal. Hence, if the nGAUGE_INT1 signal of low level is input, the output of the Q terminal, which is the output of the FF1, is forcibly changed to low level.

When the supply of the voltage Vccss from the load switch 40 is started, high level is input to the D terminal of the FF1. Also, since a clock signal is input from the MCU 130 to a clock terminal (not shown), the output of the Q terminal is normally at high level. Here, inputting the clock signal can be changing the input level of the clock terminal from low level to high level. It is assumed that the FF1 holds the input level of the D terminal when the input level of the clock terminal changes from low level to high level, and outputs it from the Q terminal.

The output (nALARM_Latched signal) of the Q terminal of the FF1 is input to the switch SS, the transformation circuit 120, a switch SL connected to the ICE terminal of the charge circuit 20, and the MCU 130 (PA10 terminal). If the nALARM_Latched signal output from the Q terminal of the FF1 changes to a predetermined level (low level) representing an abnormality,
- since the switch SS is turned off, power supply to the heater HT is shut off,
- since the EN terminal of the DC/DC 120 changes to low level, power supply to the heater HT stops,
- when the switch SL is turned on, a resistor R9 no longer contributes to division of the voltage Vccss with a resistor R10, and since the input of the ICE terminal of the charge circuit 20 changes to high level that is the same as the voltage V_{CC33}, charge is stopped. Note that at this timing, the nCharger_ Enable signal is not generated, and the potential of the PB3 terminal is unfixed.

As described above, when the output of the FF1 is changed to low level, it is possible to inhibit power supply from the transformation circuit 120 to the heater HT and charge of the battery BT by the charge circuit 20 without interposing the MCU 130 and protect the circuit.

If the nALARM_Latched signal of low level is input to the PA10 terminal, the MCU 130 determines that an abnormality that needs reset is detected, and using the light emitting unit NU or the vibrator M, prompts the user to perform the reset operation. Detection of the reset operation and the corresponding reset procedure are the same as described above.

### (Abnormality Detection by Heater Thermistor and Case Thermistor)

Abnormality detection by the heater thermistor TH and the case thermistor TC and an operation according to the abnormality detection will be described next. The heater thermistor TH is arranged at a position close to the heater HT. Alternatively, the heater thermistor TH is arranged at a position in contact with the heater HT. Hence, if the relationship between the actual temperature of the heater HT and the resistance value of the heater thermistor TH is measured in advance, the resistance value of the heater thermistor TH can be used as the temperature of the heater HT.

A voltage obtained by dividing the voltage V_{CC33_SLP} by the heater thermistor TH and the resistor R1 is input to the inverting input of the operational amplifier A2. Also, a voltage obtained by dividing the voltage Vccss by resistors R4 and R5 is input as a reference voltage or a threshold voltage to the noninverting input of the operational amplifier A2. Preferably, since the heater thermistor TH is formed by an NTC thermistor, the voltage of the noninverting input in a state in which the heater HT is not overheated is low, and the voltage of the noninverting input in a state in which the heater HT is overheated is high. The values of the voltage dividing resistors R3 to R5 are adjusted such that in a state in which the heater HT is not overheated, the voltage of the noninverting input becomes higher than the voltage of the inverting input, and in a state in which the heater HT is overheated, the voltage of the inverting input becomes higher than the voltage of the noninverting input. Hence, the operational amplifier A2 functions as a circuit (first detection circuit) that detects a temperature abnormality, more specifically, overheat as an example of an abnormality concerning the heater HT. Note that the values of the voltage dividing resistors R3 to R5 can be adjusted based on the resistance value of the heater thermistor TH when the temperature of the heater HT reaches the threshold of overheat.

Hence, the output of the operational amplifier A2 is at high level in a state in which the heater HT is not overheated (normal state) and at low level in a state in which the heater HT is overheated (abnormal state).

The output of the operational amplifier A2 is directly connected to the /CLR terminal of the FF2. Also, the output of the operational amplifier A2 is connected to the D terminal and the /CLR terminal of the FF1 via a diode D 1. The cathode of the diode D1 is connected to the output of the operational amplifier A2. If the temperature of the heater HT is in a normal state, the input to the /CLR terminal of the FF2 is at high level. If the input to the /CLR terminal is at high level, the output of the Q terminal of the FF2 maintains the initial state. The voltage V_{CC33_0} is input to the D terminal of the FF2. If there is no abnormality at the time of starting up, the FF2 holds the input level of the D terminal in the initial state. Hence, if the temperature of the heater HT is in the normal state, the Q terminal output of the FF2 is at high level, and the /Q terminal output (HEATER_Latched signal) is at low level.

If the heater HT changes to an overheat state, the output of the operational amplifier A2 changes to low level. Thus, the input to the /CLR terminal of the FF2 changes to low level. If the /CLR terminal changes to low level, the FF2 is forcibly initialized, the output of the Q terminal changes to low level, and the output of the /Q terminal changes to high level. Hence, the Heater_Latched signal that is the output of the /Q terminal of the FF2 is held at high level. The HEATER_Latched signal is input to the PB14 terminal of the MCU 130. The operation of the MCU 130 upon detecting that the HEATER_Latched signal changes to high level will be described later.

The voltage V_{CC33_0} is supplied to the VCC terminal of the FF2. The voltage V_{CC33_0} is continuously supplied even during a period in which supply of the voltage V_{CC33_}that drives the MCU 130 is temporarily stopped in the reset procedure. Hence, the information (the outputs of the Q and /Q terminals) held by the FF2 is held without being erased even if the MCU 130 is reset.

The case thermistor TC is arranged at a position close to the inner surface of the case 2. Alternatively, the case thermistor TC is arranged at a position in contact with the inner surface of the case 2. If the relationship between the actual temperature of the case 2 and the resistance value of the case thermistor TC is measured in advance, the resistance value of the case thermistor TC can be used as the temperature of the case 2.

A voltage obtained by dividing the voltage V_{CC33_SLP} by the case thermistor TC and a resistor R6 is input to the inverting input of the operational amplifier A3. Also, a voltage obtained by dividing the voltage Vccss by a resistor R7 and a resistor R8 is input as a reference voltage or a threshold voltage to the noninverting input of the operational amplifier A3. Preferably, since the case thermistor TC is formed by an NTC thermistor, the voltage of the noninverting input in a state in which the case 2 does not have a high temperature is low, and the voltage of the noninverting input in a state in which the case 2 has a high temperature is high. The values of the voltage dividing resistors R6 to R8 are adjusted such that in a state in which the case 2 of the power supply unit 1 does not have a high temperature, the voltage of the noninverting input becomes higher than the voltage of the inverting input, and in a state in which the case 2 has a high temperature, the voltage of the inverting input becomes higher than the voltage of the noninverting input. Hence, the operational amplifier A3 functions as a circuit (second detection circuit) that detects a high temperature as an abnormality concerning the temperature of the case 2. Note that the values of the voltage dividing resistors R6 to R8 can be adjusted based on the resistance value of the case thermistor TC when the temperature of the case 2 reaches a high temperature.

Hence, the output of the operational amplifier A3 is at high level in a state in which the case 2 does not have a high temperature (normal state) and at low level in a state in which the case 2 has a high temperature (abnormal state).

The output of the operational amplifier A3 is directly connected to the /CLR terminal and the D terminal of the FF1. Also, the output of the operational amplifier A3 is connected to the anode of the diode D 1. If the temperature of the case 2 is in a normal state, the input to the /CLR terminal of the FF1 is at high level. If the input to the /CLR terminal is at high level, the output of the Q terminal of the FF1 maintains the initial state. The voltage V_{CC33_}is input to the D terminal of the FF1. If there is no abnormality at the time of starting up, the FF1 holds the input level of the D terminal in the initial state. Hence, if the temperature of the case 2 is in the normal state, the Q terminal output (nALARM_Latched signal) of the FF1 is at high level.

The nALARM_Latched signal of high level is input to the PA10 terminal of the MCU 130 and the base of the switch SL. The switch SL is turned off.

If the case 2 changes to a high temperature state, the output of the operational amplifier A3 changes to low level. Thus, the input to the /CLR terminal of the FF1 changes to low level. If the /CLR terminal changes to low level, the FF1 is forcibly initialized, and the output (nALARM_Latched signal) of the Q terminal changes to low level. Hence, as in a case where the battery monitoring circuit 100 outputs the nGAUGE_INT1 signal of low level, it is possible to inhibit power supply from the transformation circuit 120 to the heater HT and charge of the battery BT by the charge circuit 20 without interposing the MCU 130 and protect the power supply unit 1.

Note that if the heater HT is in the overheat state, and the case 2 is in the high temperature state, both the outputs of the operational amplifier A2 and the operational amplifier A3 change to high level. Since the outputs of the operational amplifier A2 and the operational amplifier A3 are connected, the outputs may collide. The output of the operational amplifier A2 and the output of the operational amplifier A3 are not necessarily identical voltage values, and collision of high-level signals of different voltage values may cause an unexpected operation error. In particular, even if both the outputs of the operational amplifier A2 and the operational amplifier A3 are at high level, if the output voltage of the operational amplifier A3 is lower than the output voltage of the operational amplifier A2, it may affect the input level of the /CLR terminal of the FF2.

Hence, the diode D1 serving as a limiting circuit that limits the direction of flowing a current is connected to the connection path of the output of the operational amplifier A2 and the output of the operational amplifier A3 such that the output of the operational amplifier A3 is connected to the anode, and the output of the operational amplifier A2 is connected to the cathode. That is, when viewed from the /CLR terminal of the FF1, the output of the operational amplifier A3, the anode of the diode D1, the cathode of the diode D1, and the output of the operational amplifier A2 are connected in series. Alternatively, the /CLR terminal of the FF1 exists between the output of the operational amplifier A3 and the anode of the diode D1, and the operational amplifier A2 is connected to the cathode of the diode D1. Hence, if the output voltage of the operational amplifier A3 is lower than the output voltage of the operational amplifier A2, the current that flows in the direction from the operational amplifier A2 to the operational amplifier A3 is limited by the diode D1, and it is possible to avoid the output voltage of the operational amplifier A1 affecting the input level of the /CLR terminal of the FF2. Note that the direction of the diode D 1 can be determined in accordance with the output levels of the operational amplifiers A2 and A3 at the time of abnormality detection such that the influence of the output level of the operational amplifier A3 on the output level of the operational amplifier A2 at the time of abnormality detection is suppressed.

On the other hand, if the heater HT is in the overheat state, and the case 2 is in the normal state, the circuit should immediately be protected by inhibiting charge of the battery BT or power supply to the heater HT. In this case, the output of the operational amplifier A2 is at low level, and the output of the operational amplifier A3 is at high level. If the output voltage of the operational amplifier A3 is higher than the output voltage of the operational amplifier A2, a voltage in the forward direction is applied to the diode D 1. Also, since the current flowing from the operational amplifier A3 into the operational amplifier A2 is connected to ground, the input to the /CLR terminal of the FF1 is pulled to ground and changes to low level even if the output of the operational amplifier A3 is at high level. As described above, when the information held by the FF2 changes to a value representing that an abnormality is detected, the information held by the FF 1 also changes to a value representing that an abnormality is detected.

Hence, if the overheat state of the heater HT is detected, it is possible to immediately inhibit power supply from the transformation circuit 120 to the heater HT and charge of the battery BT by the charge circuit 20 without interposing the MCU 130 and protect the circuit. Note that if the diode D 1 is formed by a Schottky diode, the rise of the forward current is faster than in a case where a normal diode (PN diode) using pn junction is used. Hence, the /CLR terminal of the FF1 can be changed to low level faster than in a case where a PN diode is used as the diode D 1, and the circuit can quickly be protected when the overheat state of the heater HT is detected.

Note that the HEATER_Latched signal is the /Q terminal output of the FF2 here but may be the Q terminal output. However, when the HEATER_Latched signal is changed to high level at the time of abnormality using the /Q terminal output, disturbance noise affects little as compared to a case where the HEATER_Latched signal changes to low level at the time of abnormality, and the MCU 130 can more reliably determine the abnormality.

### (Permanent Failure Determination during Heater Temperature Control)

The power supply unit 1 according to this embodiment determines whether, of serious abnormalities (permanent failures), a permanent failure concerning overheat of the heater HT has occurred at least during the period in which temperature control of the heater HT is performed in accordance with the temperature control pattern and at the time of restarting after the reset procedure.

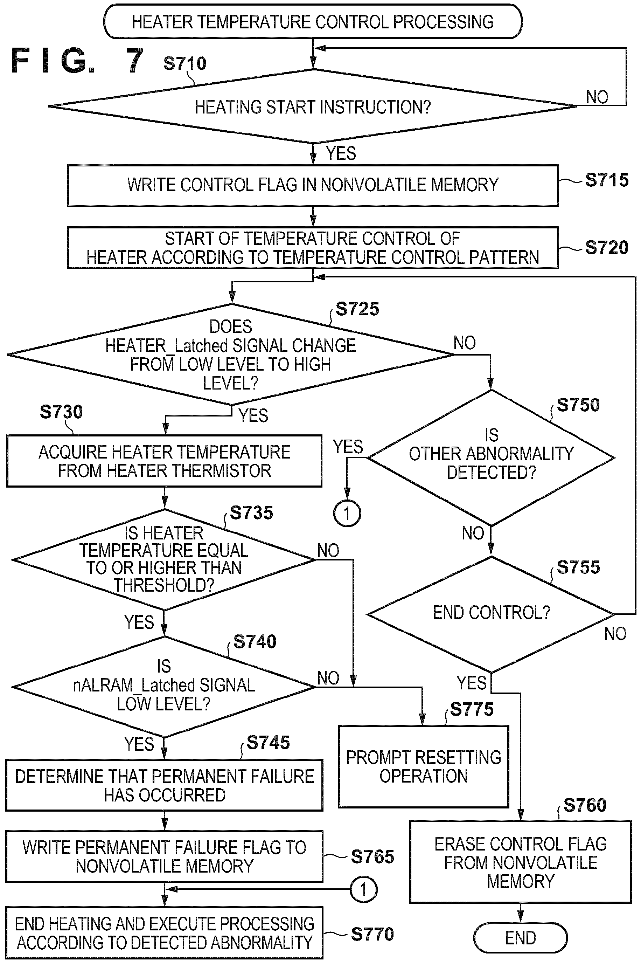

First, permanent failure determination in temperature control processing of the heater HT will be described with reference to the flowchart shown in Fig. 7. Fig. 7 is a flowchart concerning an operation associated with temperature control of the heater HT performed by the MCU 130. The operation shown in Fig. 7 can be executed by loading a program stored in the ROM (internal ROM) provided in the MCU 130 or the nonvolatile memory 70 into the RAM provided in the MCU 130 and executing it.

In step S710, the MCU 130 determines whether a heating start instruction is detected. Upon determining that a heating start instruction is detected, the MCU 130 executes step S715. If it is not determined that a heating start instruction is detected, the MCU 130 executes step S710 again.

In step S715, the MCU 130 writes a heating flag in a nonvolatile storage means (the ROM provided in the MCU 130 or the nonvolatile memory 70). The write of the flag may be changing a value such as a variable assigned as a flag from false (for example, 0) to true (for example, 1).

In step S720, the MCU 130 starts temperature control of the heater HT according to a predetermined temperature control pattern. As described above, the MCU 130 repetitively executes acquisition of the temperature of the heater HT and power supply control of the heater HT based on the acquired temperature and the temperature control pattern.

In step S725, the MCU 130 determines whether the HEATER_Latched signal input to the PB14 terminal changes from low level to high level. The change of the HEATER_Latched signal from low level to high level corresponds to that the information held by the FF2 changes from a state representing that no abnormality is detected to a state representing that an abnormality is detected.

Upon determining that the HEATER_Latched signal changes from low level to high level, the MCU 130 executes step S730. If it is not determined that the HEATER_Latched signal changes from low level to high level, the MCU 130 executes step S750.

In step S750, the MCU 130 determines whether another abnormality is detected. Detection of another abnormality includes detection of an abnormality of the heater temperature based on the resistance value of the heater H, detection of an abnormality based on an abnormality condition concerning the battery BT, and detection of an abnormality based on the input of the nALARM_Latched signal of low level. Upon determining that another abnormality is detected, the MCU 130 executes step S770. If it is not determined that another abnormality is detected, the MCU 130 executes step S755.

In step S755, the MCU 130 determines whether to end the control. If the final section defined in the temperature control pattern is ended, or if movement of the slider 13 to the closed position is detected, the MCU 130 can determine to end the control. Upon determining to end the control, the MCU 130 executes step S760. If it is not determined to end the control, the MCU 130 executes step S725.

In step S760, the MCU 130 erases the control flag written in step S715 and ends the temperature control operation of the heater HT. The erase of the flag may be changing a value such as a variable assigned as a flag from true (for example, 1) to false (for example, 0).

From the start of temperature control of the heater HT according to the temperature control pattern in step S720 to the end of the temperature control in step S755, the MCU 130 executes the processes of steps S725, S750, and S755, I²C communication with the battery monitoring circuit 100, and the like concurrently with the acquisition of the temperature of the heater HT and the power supply control of the heater HT.

Upon determining, in step S725, that the HEATER_Latched signal changes from low level to high level, in step S730, the MCU 130 acquires the temperature of the heater HT using the heater thermistor TH. Here, the heater temperature is acquired using the heater thermistor TH because no abnormality is detected in the heater temperature acquired based on the resistance value of the heater HT in the temperature control of the heater HT. This is also because the HEATER_Latched signal changes to high level, and the nALARM_Latched signal thus changes to low level, thereby inhibiting power supply to the heater HT.

In step S735, the MCU 130 determines whether the heater temperature acquired in step S735 is equal to or higher than a predetermined threshold. The threshold used here need not always be a temperature (for example, 300°C) corresponding to overheat, and may allow confirmation that the temperature is high to some extent. For example, a temperature of about 220°C to 250°C can be used as the threshold. Upon determining that the heater temperature is equal to or higher than the predetermined threshold, the MCU 130 executes step S740. If it is not determined that the heater temperature is equal to or higher than the predetermined threshold, the MCU 130 executes step S775.

In step S740, the MCU 130 determines whether the nALARM_Latched signal is at a level (here, low level) representing an abnormality. As described above, when the HEATER_Latched signal is at high level, the nALARM_Latched signal should be at low level. However, the HEATER_Latched signal may be at high level due to noise or the like. In particular, if the threshold used in step S735 is lower than the temperature corresponding to overheat, it may erroneously be determined that a permanent failure has occurred. Hence, only when it is confirmed that the nALARM_Latched signal is at low level, it is determined that a permanent failure has occurred.

Upon determining that the nALARM_Latched signal is at low level, the MCU 130 executes step S745. If it is not determined that the nALARM_Latched signal is at low level, the MCU 130 executes step S775. In step S775, the MCU 130 prompts the user to perform the reset operation, using the light emitting unit NU or the vibrator M.

In step S745, the MCU 130 determines that a permanent failure has occurred. In step S765, the MCU 130 writes a permanent failure flag in the ROM provided the MCU 130 or the nonvolatile memory 70.

In step S770, the MCU 130 executes processing according to the detected abnormality. Note that if heating of the heater HT is not stopped, the MCU 130 changes the Heater_Enable signal to low level to inhibit power supply to the heater HT before executing the processing according to the detected abnormality.

Of the processes according to detected abnormalities, operations performed when detecting abnormalities other than the permanent failure have already been described. Here, processing performed upon determining that a permanent failure has occurred will be described. The MCU 130 stops the power-pass function (the function of outputting, from the SYS terminal, the power to be input to the BAT terminal) of the charge circuit 20 via the I²C communication with the charge circuit 20. Thus, the supply of the voltage Vcc based on the power supply voltage V_{BAT} from the charge circuit 20 is stopped, and furthermore, the supply of the voltages V_{CC33_0}, Vccss, V_{CC33_SLP} derived from the voltage Vcc is stopped. Hence, power is not supplied to the MCU 130 and most other circuits, and the power supply unit 1 substantially stops operating. Since power to the reboot controller 50 is not supplied either, the reset operation is no longer accepted.

Also, when the power-pass function of the charge circuit 20 is stopped, power supply from the transformation circuit 120 to the heater HT and charge of the battery BT by the charge circuit 20 can be executed no longer. Note that to improve the safety of the power supply unit 1 in a case where it is determined that an abnormality corresponds to a serious abnormal state, if it is determined that a permanent failure has occurred, as a part of the operation for inhibiting the user from using the power supply unit 1, before the power-pass function of the charge circuit 20 is stopped, the MCU 130 may inhibit power supply from the transformation circuit 120 to the heater HT and charge of the battery BT by the charge circuit 20 by the above-described method using the Heater_Enable signal and the nCharger Enable signal.

Alternatively, without executing step S765, in step S770, the MCU 130 may prompt, by the light emitting unit NU or the vibrator M, the user to perform the reset operation. This is because an operation error may occur in the MCU 130 itself, and therefore, the occurrence of the permanent failure is determined again in the re(start) processing after reset. If it is determined that a permanent failure has occurred, the power supply unit 1 substantially becomes unusable, and therefore, the determination needs to be done carefully.

The operation concerning the determination of the permanent failure during temperature control of the heater HT has been described above. Note that even if it is detected that the HEATER_Latched signal changes to a level representing an abnormality in a state in which temperature control processing of the heater HT is not performed, the MCU 130 can execute the processing from step S730 described above.

### (Permanent Failure Determination In (Re)Start)

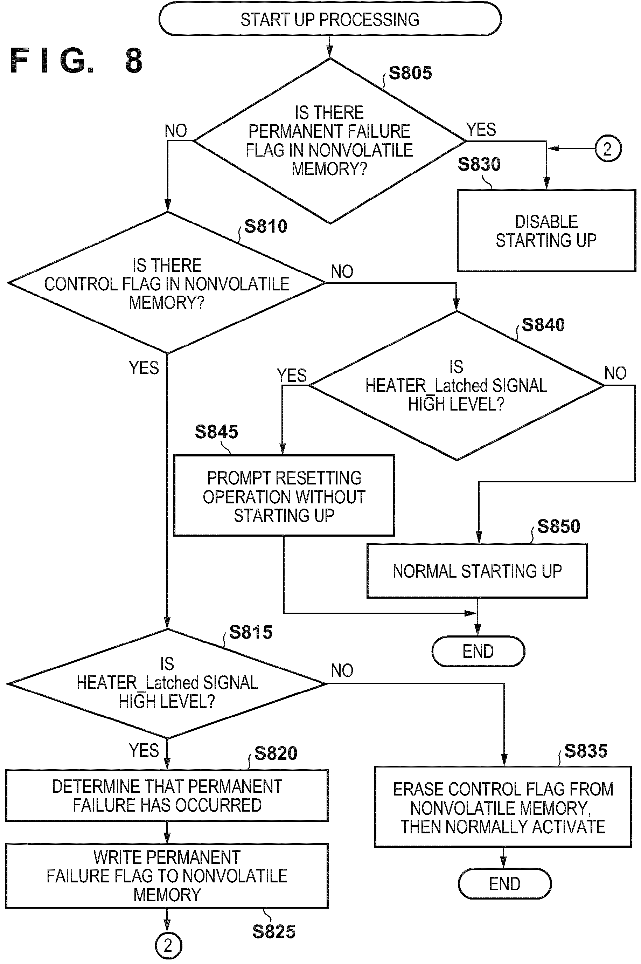

A permanent failure determination operation at the time of (re)start will be described next with reference to the flowchart shown in Fig. 8. Fig. 8 is a flowchart concerning an operation at the time of starting up performed by the MCU 130. The operation shown in Fig. 8 can be executed by loading a program stored in the ROM (internal ROM) provided in the MCU 130 or the nonvolatile memory 70 into the RAM provided in the MCU 130 and executing it.

In step S805, the MCU 130 determines whether a permanent failure flag exists in a nonvolatile storage means (the internal ROM or the nonvolatile memory 70). Here, that the flag exists corresponds to that the flag has the true value (1). Upon determining that the permanent failure flag exists, the MCU 130 executes step S830. If it is not determined that the permanent failure flag exists, the MCU 130 executes step S810.

In step S810, the MCU 130 determines whether a control flag exists in the internal ROM or the nonvolatile memory 70. Upon determining that the control flag exists, the MCU 130 executes step S815. If it is not determined that the control flag exists, the MCU 130 executes step S840.

In step S815, the MCU 130 determines whether the HEATER_Latched signal is at a level (here, high level) representing that an abnormality is detected. Upon determining that the HEATER_Latched signal is at high level, the MCU 130 executes step S820. If it is not determined that the HEATER_Latched signal is at high level, the MCU 130 executes step S835.

As described above, the information held by the FF2 is not erased by the reset procedure. For this reason, if overheat of the heater HT is detected by the heater thermistor TH before execution of the reset procedure, the HEATER_Latched signal maintains high level even after restart.

In addition, if the supply of the voltage V_{CC33_}is resumed after reset, the operational amplifier A2 and the MCU 130 operate. If the overheat state of the heater HT is eliminated at this point of time, the output of the operational amplifier A2 returns to high level. However, since no clock signal is input from the MCU 130 to the clock terminal (not shown) of the FF2, the information held by the FF2 does not change from before reset. For this reason, when the MCU 130 refers to the HEATER_Latched signal after reset, it is possible to confirm that overheat of the heater HT is detected before reset.

In step S820, the MCU 130 determines that a permanent failure has occurred. In step S825, the MCU 130 writes a permanent failure flag in the ROM provided in the MCU 130 or the nonvolatile memory 70.

In step S830, the MCU 130 notifies, using the light emitting unit NU or the vibrator M, the user of the occurrence of the permanent failure. Also, the MCU 130 disables the start of the power supply unit 1. More specifically, the power supply unit 1 is maintained in the sleep state, thereby inhibiting transition to the active state even if movement of the slider 13 to the open position is detected. Hence, even if the heating start instruction is input, heating is not started. Alternatively, the MCU 130 may stop the power-pass function (the function of outputting, from the SYS terminal, the power to be input to the BAT terminal) of the charge circuit 20 via the I²C communication with the charge circuit 20.

For example, if the determination in step S725 is derived not from the change of the information held by the FF2 to low level but from the change of the level of the PB14 terminal to low level by noise, the HEATER_Latched signal to be referred to by the MCU 130 after reset is at low level. Hence, erroneously executing the operation in determining the permanent failure is suppressed. Also, even in a case where the MCU 130 causes an operation error before reset, when reset is performed, the permanent failure determination can more correctly be executed in a state in which the MCU 130 normally operates.

In step S835, the MCU 130 erases the control flag from the ROM provided in the MCU 130 or the nonvolatile memory 70. The MCU 130 then normally starts.

In step S840, the MCU 130 determines whether the HEATER_Latched signal is at a level (here, high level) representing that an abnormality is detected. Upon determining that the HEATER_Latched signal is at high level, the MCU 130 executes step S845. If it is not determined that the HEATER_Latched signal is at high level, the MCU 130 executes step S850.

In step S845, the MCU 130 prompts the user to perform the reset operation, using the light emitting unit NU or the vibrator M,. This is because an operation error of the circuit is suspected.

In step S850, the MCU 130 normally starts.

The operation concerning the determination of the permanent failure at the time of (re)start has been described above.

Note that the processing performed in a case where a permanent failure is determined may be the same or different between a case where the determination is performed at the time of (re)start and a case where the determination is performed after starting up. In any case, at least power supply to the heater HT (application of the heater voltage V_{BOOST}) is inhibited. Since this disables the function of the power supply unit 1, use of the power supply unit 1 can substantially be inhibited. Also, it is preferable to execute write of a permanent failure flag such that the permanent failure is determined reliably when the user performs the reset operation.

According to this embodiment, in the power supply unit for the aerosol generation device, an abnormality (permanent failure) associated with the heater, with which use of the device should substantially be inhibited, is determined in accordance with detection of the abnormality associated with the heater by a circuit different from the MCU 130 that performs temperature control of the heater. Hence, even if the abnormality associated with the heater cannot be detected by the MCU 130 due to some reason, the abnormality associated with the heater, with which use of the device should substantially be inhibited, can appropriately be determined.

Also, information indicating that the abnormality associated with the heater is detected by the circuit different from the MCU 130 is held such that the information is not erased by resetting the power supply unit. Hence, by referring to the information after reset, the permanent failure can be determined anew in a state in which the MCU 130 is normally operating. It is therefore possible to more correctly determine the permanent failure.

Furthermore, if the permanent failure is determined, information indicating it is stored in a nonvolatile storage means and referred to at the time of starting up. It is therefore possible to reliably inhibit use of the device once the permanent failure is determined.

The invention is not limited to the foregoing embodiments, and various variations/changes are possible within the spirit of the invention.

### REFERENCE SIGNS LIST

1...power supply unit, 10...case, 11...front panel, 13...slider, 130...MCU, SW...switch, HT...heater, TH...heater thermistor, TC...case thermistor, FF1, FF2...holding circuit

## Claims

1. A power supply unit for an aerosol generation device, comprising:
control means for controlling a temperature of a load that heats an aerosol source; and
first holding means for holding first information indicating whether an abnormality associated with the load is detected by means different from the control means,
wherein if it is detected that the first information changes from a state representing that no abnormality is detected to a state representing that an abnormality is detected during a period from a start to an end of temperature control of the load, the control means determines that an abnormality with which use of the power supply unit should be inhibited has occurred.

2. The power supply unit according to claim 1, wherein
in addition to detecting that the first information changes from the state representing that no abnormality is detected to the state representing that the abnormality is detected during the period,
if it is determined that the temperature of the load is not less than a predetermined threshold, the control means determines that the abnormality with which use of the power supply unit should be inhibited has occurred.

3. The power supply unit according to claim 1, further comprising second holding means for holding second information indicating whether an abnormality different from the abnormality associated with the load is detected,
wherein in addition to detecting that the first information changes from the state representing that no abnormality is detected to the state representing that the abnormality is detected during the period,
if it is determined that the temperature of the load is not less than a predetermined threshold, and the second information represents that the abnormality is detected, the control means determines that the abnormality with which use of the power supply unit should be inhibited has occurred.

4. The power supply unit according to claim 3, wherein the second information represents whether one of an abnormality associated with a power supply of the power supply unit and an abnormality associated with a temperature of a case that constitutes a surface of the power supply unit is detected.

5. The power supply unit according to any one of claims 2 to 4, wherein the control means performs the temperature control of the load based on the temperature of the load detected based on a resistance value of the load.

6. The power supply unit according to claim 5, wherein if it is detected that the first information changes from the state representing that no abnormality is detected to the state representing that the abnormality is detected during the period, the control means acquires the temperature of the load from detection means that detects the temperature of the load.

7. The power supply unit according to any one of claims 1 to 6, wherein the control means performs the determination at the time of starting up as well.

8. The power supply unit according to claim 7, wherein the control means writes predetermined information in nonvolatile storage means when starting the temperature control of the load, and erases the predetermined information from the storage means when ending the temperature control of the load.

9. The power supply unit according to claim 8, wherein the first holding means holds the first information held before reset of the control means even after the reset of the control means.

10. The power supply unit according to claim 9, wherein at the time of starting up after the reset, if the predetermined information exists in the storage means, and the information held by the first holding means represents that the abnormality is detected, the control means determines that the abnormality with which use of the power supply unit should be inhibited has occurred.

11. The power supply unit according to any one of claims 1 to 10, wherein upon determining that the abnormality with which use of the power supply unit should be inhibited has occurred, the control means writes, in nonvolatile storage means, information indicating that the abnormality with which use of the power supply unit should be inhibited has occurred.

12. The power supply unit according to claim 11, wherein if the information indicating that the abnormality with which use of the power supply unit should be inhibited has occurred exists in the nonvolatile storage means at the time of starting up, the control means disables start of the power supply unit.

13. The power supply unit according to any one of claims 1 to 12, wherein upon determining that the abnormality with which use of the power supply unit should be inhibited has occurred, the control means inhibits heating of the load.

14. A method executed by control means that is comprised in a power supply unit for an aerosol generation device and for controlling a temperature of a load configured to heat an aerosol source, wherein the power supply unit further comprises first holding means for holding first information indicating whether an abnormality associated with the load is detected by means different from the control means, the method comprising:
if it is detected that the first information changes from a state representing that no abnormality is detected to a state representing that an abnormality is detected during a period from a start to an end of temperature control of the load, determining that an abnormality with which use of the power supply unit should be inhibited has occurred.
